# EUROPÄISCHE PATENTANMELDUNG

(11) **EP 2 574 419 A1**
(43) Veröffentlichungstag der Anmeldung: **03.04.2013**
(21) Anmeldenummer: 11007895.3
(22) Anmeldetag: 29.09.2011
(51) Int. Cl.: B23K 26/36, B44C 1/22

(54) **Rad mit optisch gestalteter äußeren Oberfläche sowie Verfahren zu dessen Herstellung**

(71) Anmelder: Borbet GmbH, 59969 Hallenberg (DE)
(72) Erfinder: Reitz, Christian, 59969 Hallenberg (DE)
(74) Vertreter: Stenger, Watzke & Ring

(57) **Zusammenfassung**

Die Erfindung betrifft ein Verfahren zur Herstellung eines Rades mit einer optisch gestalteten äußeren Oberfläche. Zudem betrifft die Erfindung ein Rad für ein Fahrzeug mit einer bei bestimmungsgemäßer Verwendung nach außen freiliegenden und sichtbaren Oberfläche. Zur Erreichung einer einfachen, kostengünstigen und dennoch vielseitigen Bearbeitung und/oder Gestaltung des Rades wird mit der Erfindung verfahrensseitig vorgeschlagen, dass wenigstens ein Teilbereich der Oberfläche mittels einer Laservorrichtung bearbeitet wird. Vorrichtungsseitig wird vorgeschlagen, dass die Oberfläche in wenigstens einem Teilbereich von einer Beschichtung wenigstens teilweise befreit ausgebildet ist.

## Beschreibung

Die Erfindung betrifft ein Verfahren zur Herstellung eines Rades mit einer optisch gestalteten äußeren Oberfläche. Zudem betrifft die Erfindung ein Rad für ein Fahrzeug mit einer bei bestimmungsgemäßer Verwendung nach außen freiliegenden und sichtbaren Oberfläche.

Räder für Fahrzeuge sind aus dem Stand der Technik bekannt. Es handelt sich dabei um massenhaft, beispielsweise durch Gießen oder Schmieden hergestellte Bauteile. Gattungsgemäße Räder weisen einen Felgenkörper zur Aufnahme eines Reifens und eine bei bestimmungsgemäßer Verwendung des Rades nach außen freiliegende und sichtbare Oberfläche auf. Diese Oberfläche verläuft im Wesentlichen radial zur Rotationsachse des Rades. Diese Oberfläche ist nicht zuletzt aus Gewichtsgründen mit Ausnehmungen versehen, so dass das Rad im Bereich der Oberfläche eine Speichenstruktur im weitesten Sinne aufweist.

Zur Reduktion des Gesamtgewichts und zur Optimierung der Masseverteilung eines Rades sind zahlreiche Verfahren bekannt. Komplexe, sphärische Strukturen der Oberfläche werden beispielsweise durch entsprechende Gussformen, nachträgliche spanende Bearbeitung und dergleichen ausgebildet. Diese Verfahren führen dazu, dass heutzutage Räder mit einem nahezu beliebigen Äußeren und beliebiger Struktur hergestellt werden können.

Der vorliegenden Erfindung liegt dabei die Aufgabe zugrunde, ein Verfahren zur Herstellung eines Rades mit einer optisch gestalteten äußeren Oberfläche vorzuschlagen, welches es ermöglicht, in einfacher und wirtschaftlicher Weise auch Rad-Oberflächen sehr komplexer Struktur zu bearbeiten und zu gestalten. Zudem soll mit der Erfindung ein neuartiges Rad vorgeschlagen werden.

Zur Lösung wird verfahrensseitig vorgeschlagen, dass wenigstens ein Teilbereich der Oberfläche mittels einer Laservorrichtung bearbeitet wird.

Mit der Erfindung wird im Bereich der Räderherstellung erstmalig ein Verfahren vorgeschlagen, bei dem eine Laservorrichtung eingesetzt wird. Die Fachwelt ging bislang davon aus, dass zur Bearbeitung und Gestaltung der nach außen freiliegenden und sichtbaren Oberfläche von Rädern Spanverfahren, Fügeverfahren und/oder Beschichtungsverfahren erforderlich sind. Dies deswegen, da ein Rad im Laufe seines Lebens unterschiedlichsten Belastungen und Einsatzbedingungen Stand halten muss (beispielsweise Temperaturschwankungen Sommer/Winter, andauernde Feuchtigkeit, mechanische Einwirkungen und/oder dergleichen). Versuche der Anmelderin haben nun erstmalig gezeigt, dass die Entfernung von zumindest Teilen einer Beschichtung und/oder eines Überzuges im Bereich der Oberfläche mittels einer Laservorrichtung zu derartig hochwertigen Resultaten führt, dass die entsprechend bearbeiteten und gestalteten Bereiche über die gesamte Lebensdauer des Rades standfest ausgebildet sind.

Erfindungsgemäß können Teilbereiche der Oberfläche mittels der Laservorrichtung bearbeitet werden. Die Laservorrichtung emittiert hierzu einen Laserstrahl. Mittels des Laserstrahls wird die Oberfläche verändert, beispielsweise durch Anlassen und/oder dergleichen. Die Intensität des Laserstrahls und die Bestrahlungsdauer sind derart eingestellt, dass die Veränderung der Oberfläche nur in einem zuvor geplanten Maß durchgeführt wird. Dies ermöglicht es in vorteilhafter Weise unterschiedlichste Gestaltungen der Oberfläche auszubilden, beispielsweise hinsichtlich Muster, Formen, Farben und/oder dergleichen. Gemäß der Erfindung kann die zu lasernde Fläche die reine metallische Fläche sein, die beispielsweise mechanisch abgedreht oder poliert oder sonst wie bearbeitet sein kann. Auch kann die Fläche mit einer Beschichtung versehen sein. Die Beschichtung ihrerseits wird erwärmt, angeschmolzen oder entfernt, je nachdem welche optischen Effekte der Veränderung sich durch die Behandlung mit dem Laserstrahl ergeben.

Erfindungsgemäß kommt eine Laservorrichtung zum Einsatz. Es kann beispielsweise ein Faserlaser oder ein Kohlenstoffdioxidlaser verwendet werden. Entscheidend ist, dass zur Bearbeitung und/oder Gestaltung unterschiedlichster Rädertypen ein und dieselbe Laservorrichtung verwendet werden kann. Das Vorhalten verschiedener Werkzeuge, beispielsweise Fräsköpfe, und das ständige Wechseln dieser Werkzeuge gemäß Stand der Technik entfällt mit der Erfindung vollständig.

Der Clou der Erfindung besteht somit darin, dass ein besonders einfaches und kostengünstiges Herstellverfahren für Räder vorgeschlagen wird, welches gleichzeitig aber auch ein großes Anwendungsspektrum und die Möglichkeit zur Bearbeitung und Gestaltung auch komplexester Strukturen von Rädern ermöglicht. Im Unterschied zum Stand der Technik kann mittels der verwendeten Laservorrichtung eine äußerst komplexe, dreidimensionale beziehungsweise sphärische Bearbeitung der Oberfläche erfolgen.

Gemäß einer vorteilhaften Weiterbildung der Erfindung wird eine Beschichtung der Oberfläche mittels der Laservorrichtung zumindest teilweise entfernt. Gemäß dieser Weiterbildung können Teilbereiche der Beschichtung, beispielsweise einer Lackierung, ein Überzug und/oder dergleichen, mittels der Laservorrichtung entfernt werden. Die Laservorrichtung emittiert hierzu einen Laserstrahl. Mittels des Laserstrahls wird die Beschichtung abgetragen. Die Intensität des Laserstrahls und die Bestrahlungsdauer sind derart eingestellt, dass die Beschichtung in einem definierten Maß, insbesondere einer definierten Schichtdicke, abgetragen wird. Insbesondere kann durch entsprechende Einstellung der Laservorrichtung eine Einwirkung des Laserstrahls auf die Oberfläche des Rades gänzlich ausgeschlossen werden. Dies bedeutet, dass die Beschichtung im Bereich der Oberfläche vollständig entfernt werden kann, oder jedoch nur soweit, dass die Dicke der Beschichtung reduziert wird. Dies ermöglicht es in vorteilhafter Weise unterschiedlichste Gestaltungen der Oberfläche auszubilden, beispielsweise hinsichtlich Muster, Formen, Farben und/oder dergleichen.

Gemäß einer vorteilhaften Weiterbildung der Erfindung wird die Beschichtung und/oder der Überzug in mehreren Schichten aufgetragen. Dies bedeutet, dass beispielsweise mehrere Schichten Lack unterschiedlicher Farben auf das Rad aufgetragen werden können. Mittels der Laservorrichtung kann dann, beispielsweise durch entsprechende Programmierung, die Beschichtung je nach Ort auf der Oberfläche unterschiedlich stark abgetragen werden. Dadurch lassen sich auch besonders anspruchsvolle, mehrfarbige Gestaltungen auf der Oberfläche des Rades realisieren. Gemäß dieser Weiterbildung wird die Möglichkeit einer besonders individuellen Gestaltung von Rädern geschaffen. Dem Grunde nach ist es denkbar, dass kein einziges Rad dem anderen gleicht, und sogar von einem Käufer eines Rades selbst kreierte Muster beliebiger Art umgesetzt werden können.

Gemäß einer vorteilhaften Weiterbildung der Erfindung wird in einer kontinuierlichen Verfahrensdurchführung erst die Beschichtung auf die Oberfläche aufgetragen und anschließend die Oberfläche mittels der Laservorrichtung bearbeitet. Gemäß dieser Weiterbildung kann eine Inline-Verfahrensdurchführung realisiert werden. Dies bedeutet, dass die Beschichtung, beispielweise eine Lackierung, quasi just-in-time vor der Behandlung mit der Laservorrichtung aufgetragen werden kann. Hierdurch lässt sich eine effektive und prozessoptimierte Verfahrensdurchführung erreichen.

Gemäß einer vorteilhaften Weiterbildung der Erfindung wird die Oberfläche des Rades nach der Bearbeitung mit der Laservorrichtung versiegelt. Es kann ein Klarlack verwendet werden. Die Oberfläche und/oder die Beschichtung des Rades kann dadurch sehr effektiv gegenüber Witterungseinflüssen, mechanischen Belastungen und/oder dergleichen geschützt werden. Dadurch kann in vorteilhafter Weise sichergestellt werden, dass die mit dem erfindungsgemäßen Verfahren durchgeführte Bearbeitung und Gestaltung der Oberfläche dauerhaft beständig ist.

Gemäß einer vorteilhaften Weiterbildung der Erfindung wird die von der Laservorrichtung emittierte Strahlung mittels einer Spiegelvorrichtung umgelenkt und/oder fokussiert. Die Spiegelvorrichtung kann einen Parabolspiegel, einen konvexen Spiegel, einen konkaven Spiegel und/oder dergleichen umfassen. Entscheidend ist, dass gemäß dieser Weiterbildung umfassende und vielseitige Einsatzmöglichkeiten der Laservorrichtung geschaffen werden. Auch Räder mit einer nicht-marktüblichen Form oder Größe können durch den Einsatz einer entsprechend ausgerüsteten Spiegelvorrichtung bearbeitet und/oder gestaltet werden.

Zur Lösung wird vorrichtungsseitig vorgeschlagen, dass die Oberfläche in wenigstens einem Teilbereich von einer Beschichtung wenigstens teilweise befreit ausgebildet ist. Erfindungsgemäß wird erstmalig ein Rad geschaffen, welches in Teilbereichen seiner Oberfläche von einer Beschichtung teilweise befreit ausgebildet ist. Dadurch kann die Oberfläche des erfindungsgemäßen Rades nahezu beliebig gestaltet werden, insbesondere im Hinblick auf die Farbgestaltung. Die Erfindung schafft somit einen hinsichtlich der Gestaltung völlig neuartigen Typ Rad. Durch eine entsprechende Gestaltung der Oberfläche mit definierten, beispielsweise reflektierenden Formelementen kann zudem die Sicherheit eines im Straßenverkehr verwendeten und mit dem erfindungsgemäßen Rad ausgerüsteten Fahrzeugs deutlich erhöht werden.

Gemäß einer vorteilhaften Weiterbildung der Erfindung ist die Oberfläche des Rades versiegelt. Die Oberfläche des Rades weist hierzu eine äußere, versiegelnde Schicht auf. Diese Schicht kann beispielsweise aus Klarlack ausgebildet sein. Der Vorteil besteht darin, dass die Oberfläche des Rades gegen Witterungseinflüsse, mechanische Beanspruchungen und/oder dergleichen standfest ist.

Gemäß einer vorteilhaften Weiterbildung der Erfindung ist die Beschichtung mehrschichtig ausgebildet. Dies bedeutet, dass verschiedenste Farben, Funktionsschichten und/oder dergleichen vorgesehen sein können. Dem Hersteller des Rades stehen somit nahezu unbegrenzte Bearbeitungs- und Gestaltungsmöglichkeiten zur Verfügung.

Weitere Vorteile und Merkmale der Erfindung ergeben sich aus der nachfolgenden Figurenbeschreibung. Dabei zeigen:
- Fign. 1 bis 3: Eine erste Ausführungsform des erfindungsgemäßen Verfahrens;
- Fign. 4 bis 6: eine zweite Ausführungsform des erfindungsgemäßen Verfahrens und
- Fig. 7: ein Ablaufdiagramm des erfindungsgemäßen Verfahrens.

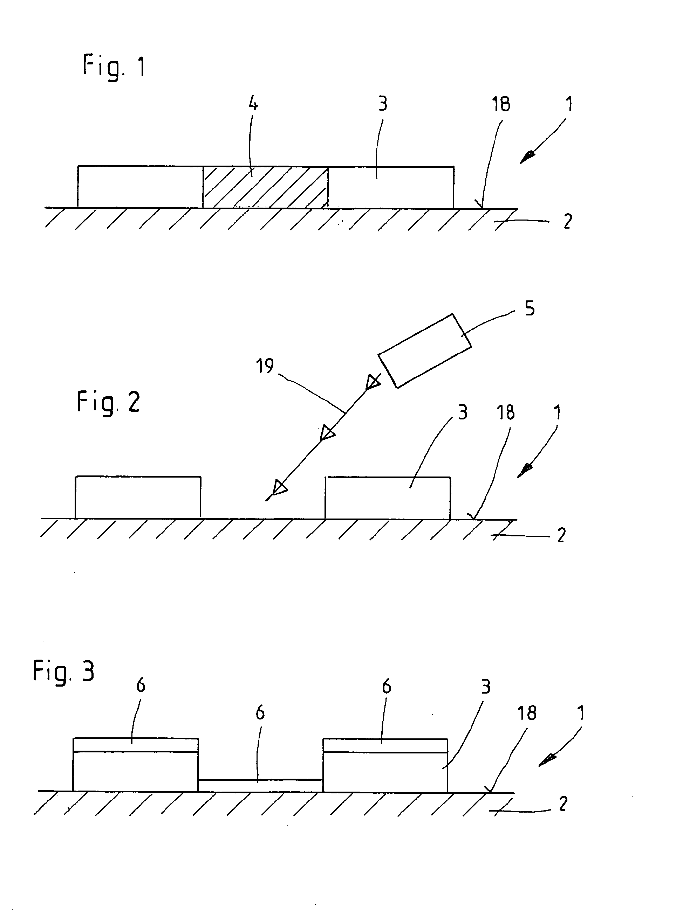

Die Fign. 1 bis 3 zeigen einer erste Ausführungsform des erfindungsgemäßen Verfahrens. Dargestellt ist ein Ausschnitt eines Rades 1. Dieser Ausschnitt zeigt einen Schnitt durch die Oberfläche 18 des Rades 1. Der Schnitt könnte beispielsweise durch den Bereich einer Speiche des Rades 1 verlaufen.

Die Oberfläche 18 ist Teil eines Grundkörpers 2 des Rades 1. Auf der Oberfläche 18 ist eine Schicht 3 angeordnet. Bei der Schicht 3 kann es sich beispielsweise um eine Lackschicht handeln. Ein Bereich 4 der Schicht 3 ist zur Entfernung bestimmt, so dass dann im endfertigen Zustand des Rades 1 die Oberfläche 18 im Bereich 4 von außen zu sehen ist.

Zur erfindungsgemäßen Verfahrensdurchführung wird eine Laservorrichtung 5 verwendet. Die Laservorrichtung 5 imitiert einen Laserstrahl 19. Hierzu kann die Laservorrichtung 5 eine entsprechende, nicht dargestellte Spiegelvorrichtung umfassen. Diese Spiegelvorrichtung dient der Lenkung und/oder Fokussierung des Laserstrahls 19.

Mittels des Laserstrahls 19 wird der Bereich 4 der Schicht 3 entfernt. Der Laserstrahl 19 bewirkt ein "Herausbrennen" des Bereichs 4 aus der Schicht 3. Es kommt zu einem Schichtabtrag. Die Intensität und die Dauer des Laserstrahls 19 sind derart gewählt, dass im Bereich der Oberfläche 18 des Grundkörpers 2 keine Veränderung, das heißt kein Materialabtrag oder dergleichen auftritt, sondern lediglich ein Abtrag der Schicht 3 erreicht wird.

Wie in Fig. 3 zu sehen, wird das endfertig bearbeitete Rad 1 versiegelt. Hierzu wird eine entsprechende Versiegelung 6, beispielsweise ein Klarlack, auf das Rad aufgetragen. Dadurch wird die Oberfläche 18, beziehungsweise die in der Schicht 3 erzeugte Struktur versiegelt, das heißt gegen beispielsweise Witterungseinflüsse, mechanische Einwirkungen und/oder dergleichen geschützt.

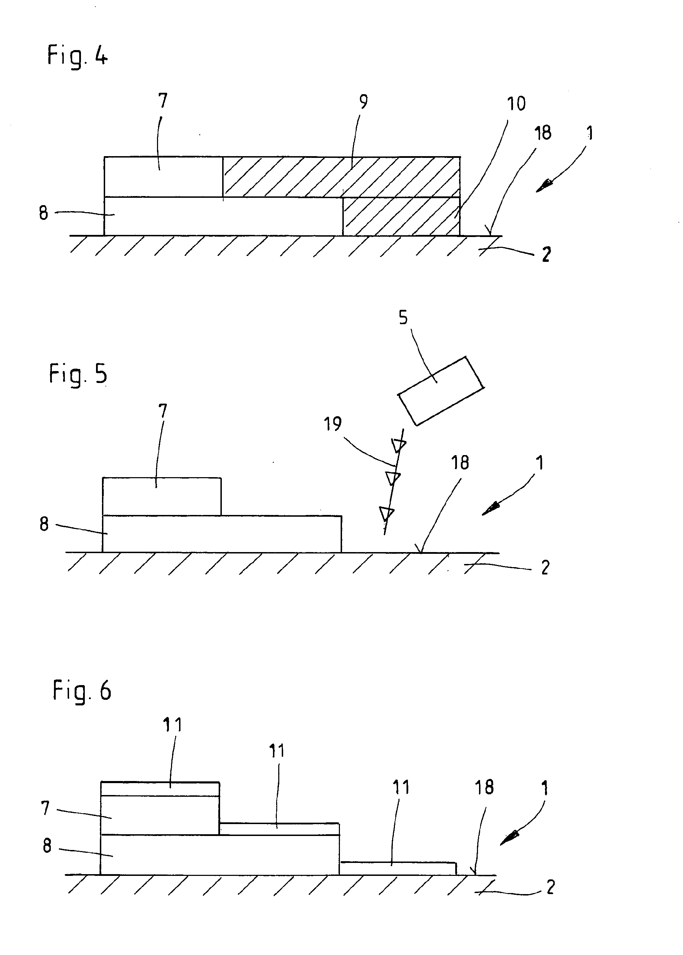

Die Fign. 4 bis 6 zeigen eine zweite Ausführungsform des erfindungsgemäßen Verfahrens. Im Unterschied zu der ersten Ausführungsform gemäß den Fign. 1 bis 3 ist die Beschichtung auf der Oberfläche 18 zweiteilig ausgebildet. Auf der Oberfläche 18 wird zunächst eine erste Schicht 8 aufgebracht, und anschließend auf diese erste Schicht 8 eine zweite Schicht 7 aufgebracht. In beiden Schichten 7, 8 sind entsprechende Bereiche 9, 10 vorgesehen, welche im Rahmen der Verfahrensdurchführung abgetragen werden sollen. Beispielsweise kann vorgesehen sein, dass es sich bei den Schichten 8, 7 um verschiedenfarbige Lacke handelt. Auf dem Rad 1 kann somit eine mehrfarbige Gestaltung hergestellt werden.

Die Laservorrichtung 5 imitiert einen entsprechenden Laserstrahl 19, wie in Fig. 5 gezeigt. Entscheidend ist, dass die Intensität und Dauer des Laserstrahls 19 derart eingestellt wird, dass im Bereich 9 nur die zweite Schicht 7 abgetragen wird. Die erste Schicht 8 bleibt zunächst bestehen, so dass sich in Blickrichtung auf die Oberfläche 18, das heißt mit Bezug auf die Figurenebene von oben, die zweifarbige Gestaltung einstellt.

Entsprechend der ersten Ausführungsform wird auch bei dieser zweiten Ausführungsform des Verfahrens eine Versiegelung 11 aufgebracht, die dem Schutz des Rades 1, insbesondere der Oberfläche 18 und der beiden Schichten 7, 8 dient.

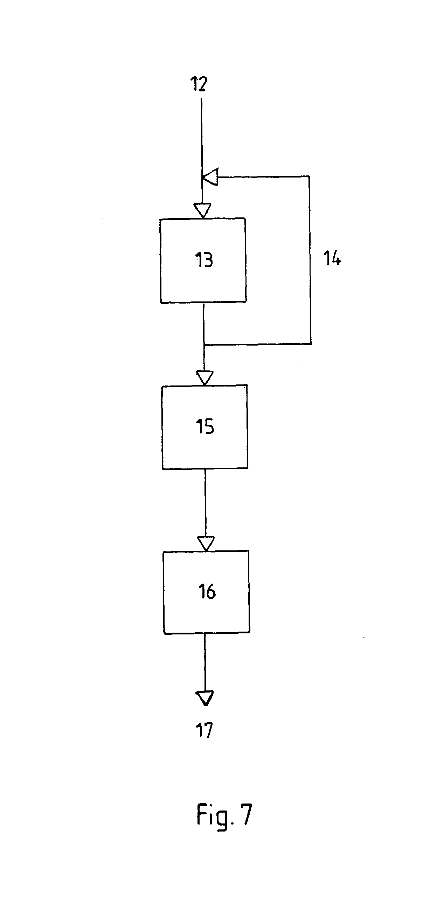

Fig. 7 zeigt ein schematisches Ablaufdiagramm der erfindungsgemäßen Verfahrensdurchführung. Zum Start 12 wird der Grundkörper 2 eines Rades bereitgestellt. Anschließend wird der Grundkörper 2 beschichtet 13. Hierbei kann der Grundkörper 2 vollständig, oder nur in Teilbereichen beschichtet werden. Sofern beispielsweise eine Mehrfarb-Gestaltung gewünscht wird, kann im Rahmen einer Wiederholung 14 der Verfahrensschritt des Beschichtens 13 wiederholt werden.

Der beschichtete Grundkörper 2 wird im Verfahrensschritt des Entfernens 15 mittels der Laservorrichtung 5 bearbeitet. Während dieser Bearbeitung werden Teile der Schichten ganz oder teilweise abgetragen. Anschließend folgt der Verfahrensschritt des Versiegelns 16. Beim Versiegeln werden die Oberfläche 18 sowie die entsprechenden Schichten 3,7, 8 mit einer Versiegelungsschicht versehen, beispielsweise einem Klarlack.

### Bezugszeichenliste

- 1: Rad
- 2: Grundkörper
- 3: Schicht
- 4: Bereich
- 5: Laservorrichtung
- 6: Versiegelung
- 7: Schicht
- 8: Schicht
- 9: Bereich
- 10: Bereich
- 11: Versiegelung
- 12: Start
- 13: Beschichten
- 14: Wiederholen
- 15: Entfernen
- 16: Versiegeln
- 17: Ende
- 18: Oberfläche
- 19: Strahl

## Patentansprüche

1. Verfahren zur Herstellung eines Rades (1) mit einer optisch gestalteten äußeren Oberfläche (18),
**dadurch gekennzeichnet, dass**
wenigstens ein Teilbereich (4, 9, 10) der Oberfläche (18) mittels einer Laservorrichtung (5) bearbeitet wird.

2. Verfahren nach Anspruch 1, **dadurch gekennzeichnet, dass** eine Beschichtung (3, 7, 8) der Oberfläche (18) mittels der Laservorrichtung (5) zumindest teilweise entfernt wird.

3. Verfahren nach Anspruch 2, **dadurch gekennzeichnet, dass** die Beschichtung (3, 7, 8) in mehreren Schichten (3, 7, 8) aufgetragen wird.

4. Verfahren nach Anspruch 2 oder 3, **dadurch gekennzeichnet, dass** in einer kontinuierlichen Verfahrensdurchführung erst die Beschichtung (3, 7, 8) auf die Oberfläche (18) aufgetragen wird und anschließend die Oberfläche (18) mittels der Laservorrichtung (5) bearbeitet wird.

5. Verfahren nach einem der vorangehenden Ansprüche, **dadurch gekennzeichnet, dass** die Oberfläche (18) des Rades (1) nach der Bearbeitung mit der Laservorrichtung (5) versiegelt wird.

6. Verfahren nach einem der vorangehenden Ansprüche, **dadurch gekennzeichnet, dass** als Laservorrichtung (5) ein Faserlaser oder Kohlenstoffdioxidlaser verwendet wird.

7. Verfahren nach einem der vorangehenden Ansprüche, **dadurch gekennzeichnet, dass** die von der Laservorrichtung emittierte Strahlung (19) mittels einer Spiegelvorrichtung umgelenkt und/oder fokussiert wird.

8. Rad (1) für ein Fahrzeug mit einer bei bestimmungsgemäßer Verwendung nach außen freiliegenden und sichtbaren Oberfläche (18), **dadurch gekennzeichnet, dass** die Oberfläche (18) in wenigstens einem Teilbereich (4, 9, 10) von einer Beschichtung (3, 7, 8) und/oder einem Überzug wenigstens teilweise befreit ausgebildet ist.

9. Rad (1) nach Anspruch 8, **dadurch gekennzeichnet, dass** die Oberfläche (18) versiegelt ist.

10. Rad (1) nach Anspruch 8 oder 9, **dadurch gekennzeichnet, dass** die Beschichtung (3, 7, 8) mehrschichtig ausgebildet ist.

## Geänderte Patentansprüche

### Geänderte Patentansprüche gemäss Regel 137(2) EPÜ.

**1.** Verfahren zur Herstellung eines Rades (1) mit einer optisch gestalteten äußeren Oberfläche (18),
**dadurch gekennzeichnet, dass**
wenigstens ein Teilbereich (4, 9, 10) der Oberfläche (18) mittels einer Laservorrichtung (5) bearbeitet wird, wobei in einer kontinuierlichen Verfahrensdurchführung erst eine aus einer oder mehreren Schichten (3, 7, 8) bestehende Beschichtung (3, 7, 8) auf die Oberfläche (18) aufgetragen wird und anschließend die Oberfläche (18) mittels der Laservorrichtung (5) bearbeitet wird, wobei die Beschichtung (3, 7, 8) zumindest teilweise entfernt wird, so dass die Oberfläche (18) unterschiedlich hohe Ebenen aufweist.

**2.** Verfahren nach Anspruch 1, **dadurch gekennzeichnet, dass** die Oberfläche (18) des Rades (1) nach der Bearbeitung mit der Laservorrichtung (5) versiegelt wird.

**3.** Verfahren nach Anspruch 1 oder 2, **dadurch gekennzeichnet, dass** als Laservorrichtung (5) ein Faserlaser oder Kohlenstoffdioxidlaser verwendet wird.

**4.** Verfahren nach einem der vorangehenden Ansprüche, **dadurch gekennzeichnet, dass** die von der Laservorrichtung emittierte Strahlung (19) mittels einer Spiegelvorrichtung umgelenkt und/oder fokussiert wird.

**5.** Rad (1) für ein Fahrzeug mit einer bei bestimmungsgemäßer Verwendung nach außen freiliegenden und sichtbaren Oberfläche (18), **dadurch gekennzeichnet, dass** die Oberfläche (18) in wenigstens einem Teilbereich (4, 9, 10) von einer oder mehreren Schichten (3, 7, 8) einer Beschichtung (3, 7, 8) und/oder einem Überzug wenigstens teilweise befreit ausgebildet ist, so dass die Oberfläche (18) unterschiedlich hohe Ebenen aufweist.

**6.** Rad (1) nach Anspruch 5, **dadurch gekennzeichnet, dass** die Oberfläche (18) versiegelt ist.

**7.** Rad (1) nach Anspruch 5 oder 6, **dadurch gekennzeichnet, dass** die Beschichtung (3, 7, 8) mehrschichtig ausgebildet ist.
